(19)

Europäisches
Patentamt
European
Patent Office
Office européen
des brevets

(11) **EP 2 397 649 A1**

(12) **EUROPEAN PATENT APPLICATION**

(43) Date of publication:
   **21.12.2011 Bulletin 2011/51**

(51) Int Cl.:
   **E21B 47/06** (2006.01)    **G01F 1/00** (2006.01)

(21) Application number: **10251068.2**

(22) Date of filing: **10.06.2010**

(84) Designated Contracting States:
   **AL AT BE BG CH CY CZ DE DK EE ES FI FR GB
   GR HR HU IE IS IT LI LT LU LV MC MK MT NL NO
   PL PT RO SE SI SK SM TR**
   Designated Extension States:
   **BA ME RS**

(71) Applicant: **BP Exploration Operating Company
   Limited
   Sunbury on Thames Middlesex TW16 7BP (GB)**

(72) Inventor: **The designation of the inventor has not
   yet been filed**

(74) Representative: **Collins, Frances Mary
   BP International Limited
   Global Patents & Technology Law
   Chertsey Road
   Sunbury on Thames
   Middlesex TW16 7LN (GB)**

(54) **Method and system for determining relative mass fluxes**

(57)    A computer-implemented method for determining relative mass fluxes of fluids present in two or more layers of an oil-bearing reservoir is provided. Each of the layers comprises a porous and permeable rock formation, and each layer is in fluidic communication with a production well arranged to allow fluid to flow from each layer into the production well. Geothermal temperature data of the rock formation of each of the two or more layers and measured temperature data are received. The geothermal temperature data is indicative of the temperature of fluid present in each of the layers, and the measured temperature data is indicative of a temperature of fluid present at a location in the production well. On the basis of differences between the geothermal and measured temperature data, mass flux data indicative of relative mass fluxes of the fluids in the two or more layers is calculated. The relative mass fluxes correspond to a range of possible mass fluxes in each of the two or more layers.

   A computer-implemented method for monitoring the mass flux of fluids present in two or more layers of an oil-bearing reservoir is also provided.

Figure 2

**Description**

Field of the Invention

The present invention relates to a method and a system for determining relative mass fluxes of fluids present in two layers of an oil-bearing reservoir. The method and system use temperature data of the oil reservoir environment and of fluid produced from the reservoir in a mass flux algorithm to determine the relative mass fluxes.

Background of the Invention

It has long been known that only a portion of the total crude oil present in a reservoir can be recovered during a primary recovery process, this primary process resulting in oil being recovered under the natural energy of the reservoir. The reservoir typically takes the form of an oil-bearing subterranean rock formation having sufficient porosity and permeability to store and transmit fluids, and with which oil is associated, for example being held in pores or between grains of the rock formation. So-called secondary recovery techniques are used to force additional oil out of the reservoir, the simplest method of which is by direct replacement with another medium in the form of an injected fluid, usually water or gas. Enhanced oil recovery (EOR) techniques can also be used. The purpose of such EOR techniques is not only to restore or maintain reservoir pressure, but also to improve oil displacement in the reservoir, thereby minimising the residual oil saturation of the reservoir, that is, the volume of oil present in the reservoir.

"Waterflooding" is one of the most successful and extensively used secondary recovery methods. Water is injected, under pressure, into reservoir rock formations via injection wells. The injected water acts to help maintain reservoir pressure, and ideally sweeps displaced oil ahead of it through the rock towards one or more production wells from which the oil is recovered. The water used in waterflooding is generally saline water from a natural source such as seawater or may be produced water (i.e. water that is separated from the crude oil at a production facility).

The impact of waterfloods and EOR techniques in oil reservoirs and oil fields can be monitored, and oil field operations can be managed, by acquiring data relating to selected characteristics and/or parameters of the reservoir and employing computer-implemented reservoir models to analyse the data. Interpreting and understanding the dynamics of reservoir waterflooding is of great value. Reservoirs can include complex geological layering of many rock formations, each having different properties, which can influence the flow pattern of fluid (including oil and/or injection fluid) in different ways.

In many situations, injection fluid injected during a waterflood may find a "short-circuiting" path from an injection well to a production well along high permeability pathways within the reservoir, thereby bypassing much of the oil present in the rock formation(s) of the reservoir. In order to mitigate the impact of such effects and improve the efficiency of oil recovery, polymers may be added to the waterflood injection fluid; when they mix with the water, the polymers may act as viscosifiers for the injection fluid thereby effectively partially or fully blocking the high permeability pathways and reducing the permeability of the rock locally, leading to an enhancement of the flow in the lower permeability zones, and again improving the amount of oil recovered. As disclosed in US 7,300,973, it is also known to add polymeric microparticles to the injection fluid wherein the microparticles have labile (reversible) and non-labile internal cross links in which the microparticle conformation is constrained by the labile internal cross links. The microparticle properties, such as particle size distribution and density, of the constrained microparticle are designed to allow efficient propagation through the pore structure of hydrocarbon reservoir matrix rock. On heating to reservoir temperature and/or at a predetermined pH, the labile internal cross links start to break allowing the particle to expand by absorbing the injection fluid (normally water). The expanded particle is engineered to have a particle size distribution and physical characteristics, for example, particle rheology, which allow it to impede the flow of injected fluid in the pore structure. In doing so it is capable of diverting chase fluid into less thoroughly swept zones of the reservoir. By using either of these techniques, zones of high permeability may be blocked off deep within the reservoir, and in theory this will enable greater sweep, and hence recovery, of oil in the originally less permeable zones of the reservoir. However, the increase in viscosity of the injection fluid or the presence of polymeric particles in the injection fluid can lead to increased difficulty in injecting fluid into the reservoir rock.

In other situations, inflow control valves may be provided within the injection well at each of the different layers of the reservoir. The control valves can be opened to differing degrees in order to regulate the partitioning of the injected fluid between the different layers of reservoir rock located at different depths along the injection well.

However, in each of the situations described above, it is difficult to acquire data, especially shortly after a change in treatment, about the impact of any change in strategy of waterflooding. Chemical tracers may be injected with the displacement fluid in the injection wells; however, these tracers can only be detected once they have migrated across the reservoir to the production well, and this may require time scales of months or longer.

Additionally, a change in flow rate of the fluid produced from the reservoir, for example by measuring the flow rate in the production well using flow meters in Production Logging Toolstrings (PLT) positioned in the production well, does not provide information about how the partitioning of the flow between different layers in the geological formation may have changed. Placing flow meters in the individual layers themselves would be technically challenging and costly in terms of resources.

Summary of the Invention

In accordance with one aspect of the present invention, there is provided a computer-implemented method for determining relative mass fluxes of fluids present in two or more layers of an oil-bearing reservoir, each of the layers comprising a porous and permeable rock formation, and each layer being in fluidic communication with a production well arranged to allow fluid to flow from each layer into the production well, the method comprising the steps of:

receiving geothermal temperature data of the rock formation of each of the two or more layers, said geothermal temperature data being indicative of the temperature of fluid present in each of the layers;
receiving measured temperature data indicative of a temperature of fluid present at a location in the production well; and
on the basis of differences between the geothermal and measured temperature data, calculating mass flux data indicative of relative mass fluxes of the fluids in the two or more layers, said relative mass fluxes corresponding to a range of possible mass fluxes in each of the two or more layers.

In accordance with the above aspect there is further provided a system for determining relative mass fluxes of fluids present in two or more layers of an oil-bearing reservoir, each of the layers comprising a porous and permeable rock formation, and each layer being in fluidic communication with a production well arranged to allow fluid to flow from each layer into the production well, the system comprising:

data receiving means arranged to receive:

(i) geothermal temperature data of the rock formation of each of the two or more layers, said geothermal temperature data being indicative of the temperature of fluid present in each of the layers; and
(ii) measured temperature data indicative of a temperature of fluid present at a location in the production well;

the system further comprising:
computer-implemented means arranged to calculate, on the basis of differences between the geothermal and measured temperature data, mass flux data indicative of relative mass fluxes of the fluids in the two or more layers, said relative mass fluxes corresponding to a range of possible mass fluxes in each of the two or more layers.

Mass flux is the rate of mass flow across a unit area ($kg \cdot m^{-2} \cdot s^{-1}$). The use of geothermal temperature data and measured temperature data indicative of a temperature of fluid present in the production well in a mass flux algorithm, in order to calculate relative mass flux data indicative of relative mass fluxes of the fluids in the two or more layers, provides information on the fraction of the total mass flux in a production well that originates from each of two or more layers in a reservoir in fluidic communication with the production well. The ratio of the mass fluxes can be found independently of the total mass flux, providing a diagnostic tool based on one or more temperature measurements. It is therefore possible to recognise, monitor and react to any change in the measured temperature, and equally the impact of a particular treatment on the reservoir can be monitored via the temperature measured in the production well. In this way, the flow of fluid in the reservoir can be modelled and analysed much faster and more accurately that is currently possible using chemical tracers.

The method and system defined above can also allow for automated identification of operating modes of a crude oil displacement system associated with the reservoir, in order to maximise oil recovery. A computer-implemented reservoir model can use the relative flow data together with other information relating to the reservoir environment to simulate the fluid flow and hence the oil recovery process taking place in the reservoir. Measurements of a change in temperature can be used to determine a suitable future treatment or make changes to a current treatment in order to increase the efficiency of the crude oil displacement system. The operating mode determined by the reservoir model could comprise an instruction for the displacement system. The instruction can relate to the alteration of the concentration, volume or injection rate of injection fluid, the alteration of a control valve associated with the flow of injection fluid into a particular layer, the instigation of or a change to a treatment, such as the introduction of a polymeric solution or a dispersion of polymeric particles into a particular layer of the reservoir, or even a decision to keep the fluid injection settings as they are. Alternatively, the operating mode can suggest a change in the slug size of the injection fluid to increase the impact of any additive on the diversion of the flow.

The present invention further provides a computer-implemented method for monitoring the mass flux of fluids present in two or more layers of an oil-bearing reservoir, each of the layers comprising a porous and permeable rock formation, and each layer being in fluidic communication with a production well arranged to allow fluid to flow from each layer into the production well, the method comprising the steps of:

receiving a plurality of sets of measured temperature data, each set of measured temperature data being indicative of a temperature of fluid present at a location in the production well at a different time;
monitoring the received temperature data over time;
identifying a change to the monitored temperature data, said change being indicative of a change in relative mass fluxes of the fluids in the two or more layers, said relative mass fluxes corresponding to a range of possible mass fluxes in each of the two or more layers.

Monitoring of the produced fluid temperature can provide an insight into the evolution of the partitioning of the flow between the rock layers. The temperature variation over time can be used as a diagnostic tool; by identifying and analysing a change in the temperature the cause of the change, for example owing to an event that is impacting the flow in one of the rock layers, in order to determine the cause of the change. Alternatively or additionally, the temperature variation over time can be used as a monitoring tool; by identifying and analysing a change in the temperature the effect of an action applied to the reservoir fluid, such as an adjustment to a flow control valve or the introduction of a treatment, such as the addition of a chemical to an injection fluid, can be monitored.

Further features and advantages of the invention will become apparent from the following description of preferred embodiments of the invention, given by way of example only, which is made with reference to the accompanying drawings.

Brief Description of the Drawings

Figure 1 shows a schematic diagram showing a crude oil recovery system including a crude oil displacement system which is configurable to recover oil from a crude-oil bearing reservoir;
Figure 2 is a schematic diagram of the oil-bearing reservoir of Figure 1 in additional detail;
Figure 3 shows a system for determining relative mass fluxes of fluids present in two or more layers of the oil-bearing reservoir of Figures 1 and 2, according to an embodiment of the present invention;
Figure 4 shows the steps carried out in a method for determining relative mass fluxes of fluids present in two or more layers of the oil-bearing reservoir, according to an embodiment of the invention;
Figure 5 shows the steps carried out in a method for determining absolute mass fluxes of fluids present in two or more layers of the oil-bearing reservoir, according to an embodiment of the invention;
Figures 6a and 6b show examples of the evolution of the measured temperature of comingled fluid in a two-layer reservoir;
Figures 7a and 7b show the effect on measured temperature of closing an inflow control valve to a higher permeability layer of the two-layer reservoir;
Figures 7c and 7d show the effect on measured temperature of adding a polymer to fluid injected into the reservoir of the two-layer reservoir;
Figure 8 shows how measured temperature varies with time in a three-layer reservoir;
Figure 9 shows the ratio of mass fluxes of the two layers in a two-layer reservoir; and
Figure 10 shows a method of configuring the crude oil displacement system of Figure 1 using the relative and/or absolute mass fluxes calculated in the methods of Figures 4 and 5.

Detailed Description of the Invention

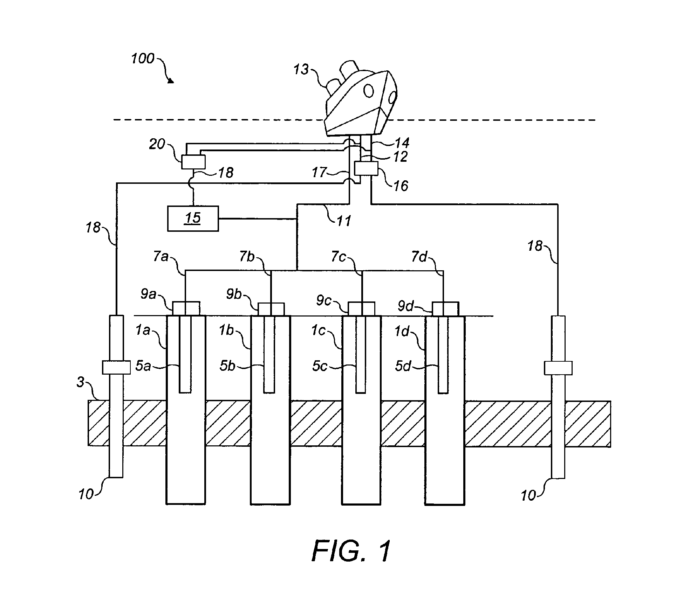

Figure 1 is a schematic block diagram showing a simplified representation of a crude oil recovery system 100 for an offshore oil field. In this Figure, a plurality of production wells 1a to 1d is used to drain at least one rock formation making up an oil reservoir 3. Each production well 1a, 1b, 1c, 1d has a production tubing 5a, 5b, 5c, 5d arranged therein and is provided with a wellhead 9a, 9b, 9c, 9d, respectively. Accordingly, the production tubing of each production well serves to transport fluids, including crude oil, produced from the reservoir 3 to the wellhead 9a, 9b, 9c, 9d. From the wellhead 9a, 9b, 9c, 9d the produced fluids pass into a flow line 7a, 7b, 7c, 7d, which connects with a main flow line 11 that transfers the produced fluids to a production facility 13 located on a platform or floating production, storage and offloading installation (FPSO) via riser 17. Moreover, an additional oil reservoir (either a single or multiple oil reservoirs, each reservoir having one or more production wells), such as generally shown by means of part 15, may be joined to the main flow line 11. The crude oil recovery system 100 also includes at least one, preferably, a plurality of injection wells 10 for injecting an aqueous injection fluid into the rock formation of the oil reservoir 3 (similarly, the additional oil reservoir(s) of part 15 are each provided with at least one injection well, preferably, a plurality of injection wells). A main injection line 12 for a pressurised injection water (such as seawater or a produced water that is separated from the crude oil at the production facility 13) extends from the production facility 13 to a subsea manifold 16 for reservoir 3. One or more further injection lines 14 may be provided if required, and it should be understood that different injection lines 12, 14 may be used to inject different injection fluids into the injection wells 10. Dedicated injection line(s) 18 extend from the subsea manifold 16 to the injection well(s) for reservoir 3. Moreover, the injection lines 12, 14 may lead to one or more additional manifold(s) 20 for each of the additional oil reservoir(s) of part 15.

Each reservoir 3 comprises at least one rock formation, which is porous and permeable, such as sandstone, and which may comprise minerals such as clays, for example a kaolinite or smectite type clay.

A crude oil displacement system of the recovery system 100 generally comprises equipment arranged to inject an injection fluid, preferably an aqueous injection fluid such as sea water, into the one or more crude oil-bearing reservoirs 3. The aqueous injection fluid is injected by injection equipment of the crude oil displacement system into the injection well(s) 10 thereof. The aqueous injection fluid then passes through the rock formation in which crude oil is present, resulting in displacement of the crude oil from a pore space of the rock formation. The oil can then be swept through the formation to a production well 1a to 1d spaced from the injection well 10, from which it is recovered. Prior to injection of the aqueous injection fluid into the reservoir, the rock formations will be at irreducible water saturation, which is the fraction of pore space occupied by formation water when the hydrocarbon content of the reservoir is at its maximum. The oil that is initially produced from the reservoir either during primary recovery or during secondary recovery prior to injection water breakthrough into a production well is termed "dry oil" as the formation water remains trapped in the rock formations.

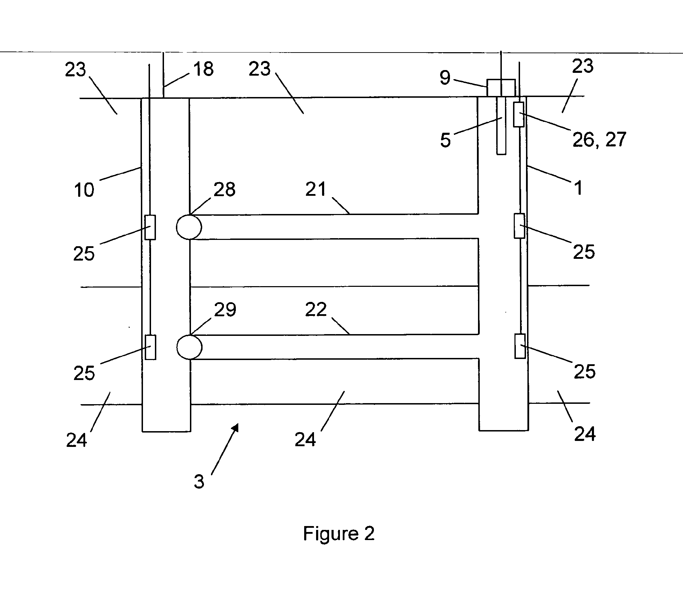

Figure 2 shows a simplified arrangement of Figure 1. An oil-bearing reservoir 3 has two oil-bearing layers. The layers, illustrated in Figure 2 by a first layer 21 and a second layer 22, comprise first and second porous and permeable rock formation 23 and 24, respectively. The layers 21, 22 are preferably hydraulically independent from one another and preferably substantially horizontal with respect to the Earth's surface. As the layers 21, 22 are at different depths from the Earth's surface, they may comprise geologically different rock formations 23, 24 from one another. By assuming the layers 21, 22 are substantially horizontal, the temperature within an individual layer, which is also indicative of the temperature of fluid present in the layer, can be assumed to be substantially constant at the geothermal temperature at that depth. Each layer 21, 22 is in fluidic communication with a production well 1 such that fluid is able to flow from each layer 21, 22 into the production well 1. The production well 1 typically has production tubing 5 and a wellhead 9 as described above with respect to Figure 1. An injection well 10 is also provided in fluidic communication with each of the layers 21, 22.

Geothermal temperature data of the rock formation 23, 24 at the depths of each of the two layers 21, 22 of the reservoir 3 can be measured using a suitable temperature sensor or probe 25 that is appropriately positioned in the injection well 10 or production well 1, preferably before any secondary treatment such as waterflooding is undertaken.

Alternatively, if the depth of each layer 21, 22 is known with sufficient accuracy, the geothermal temperature data may be obtained from publicly available literature or previous measurements. As an example, if the layers 21, 22 are 50 metres apart, and the geothermal temperature varies by 20°C per km, there is a temperature difference of approximately 1°C between the layers. As will be appreciated, oil present in and flowing from the deeper second layer 22 of Figure 2 will be higher in temperature than that present in and flowing from the first layer 21, owing to the difference in geothermal temperature between the layers 21, 22.

Oil displaced from each of the layers 21, 22 flows into the production well 1 from which it is recovered via the production tubing 5 at the wellhead 9. Oil from the different layers 21, 22 intermingles as the oil flows up the production well 1 under pressure; this pressure is either the natural pressure of the reservoir or an induced pressure owing to a waterflood or other oil recovery treatment. As explained above, the oil flows originating from different layers 21, 22 of the reservoir 3 are at different temperatures; therefore, the temperature of the total comingled flow upon reaching the production tubing 5 or wellhead 9 is controlled by the temperature in each of the layers 21, 22 and the relative volume of oil flowing into the production well 1 from each layer. In addition, if water breaks through into the production well from one or each of the layers 21, 22, the measured temperature of fluid at a measurement location in the production well 1 will evolve owing to the different thermal properties of the oil and the water. A temperature sensor 26 is provided at an appropriate measurement location, for example, in the production well 1, production tubing 5 or wellhead 9 to measure the temperature of the total comingled flow of produced oil. The flows will typically mix within a few diameters of the well after entering the production well 1. Therefore, the measurement location at which the temperature sensor 26 is placed is preferably relatively near to and above the inflow zone to the production well 1 from the formation, at a sufficient distance from a mixing location that the comingled flow has a uniform temperature; if the sensor is substantially higher than this, there may be some temperature drift owing to the change in pressure of the flow as it rises up the production well 1 towards the surface, which in turn could have an effect on the magnitude of the temperature measurement, depending on whether the fluid is water or oil owing to their different compressibilities. In this case, however, adding a second temperature sensor higher in the production well 1 can help to distinguish the oil-water ratio; this second temperature sensor may also be a useful diagnostic tool in a more complex application in which gas also flows in the production well 1.

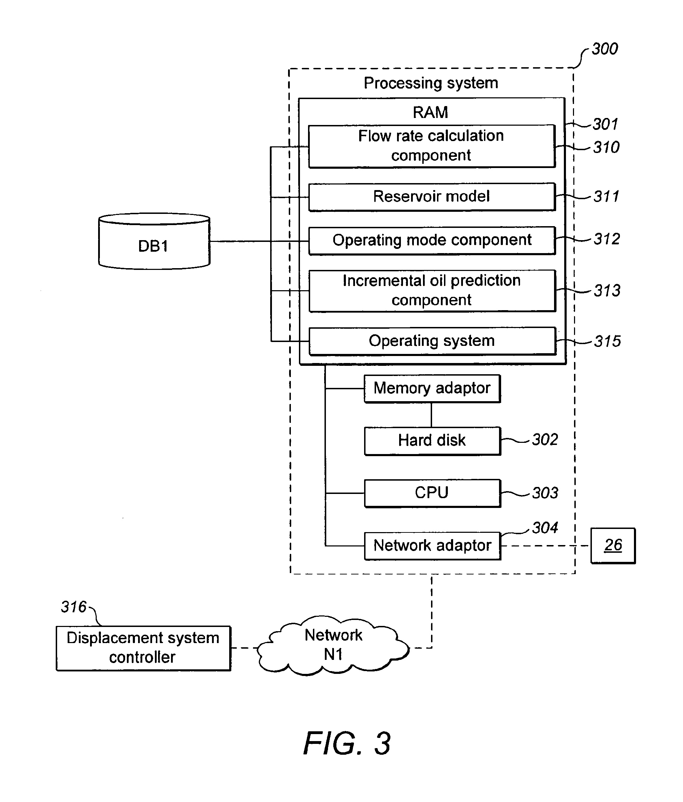

The geothermal and measured temperature data defined above can be used to provide information on the mass flux in each of the layers 21, 22; this in turn can indicate the effect of certain treatments on oil production and can be used to control and simulate the effects of future treatments, as explained further below with reference to Figures 3 to 10. The geothermal temperature gradient is typically measured very early in the life of the well, before significant flow has occurred, since the flow may change the temperature distribution local to the well. However, as the fluid flow migrates through the system the geothermal temperature in the reservoir 3 may evolve; for example, prolonged injection of injection fluid may result in cooling of the reservoir 3 as a temperature front advances through one or both of the layers 21, 22. This cooling depends on the initial temperature of the injection fluid, the initial geothermal temperature of the reservoir 3, and the specific heat capacities of the injection fluid, hydrocarbons present in the layers 21, 22 and formation rock of the layers 21, 22. Therefore, although the initially measured geothermal temperature is generally used to indicate the temperature of the fluid in each layer in the mass flux calculation, a suitable model may predict how the geothermal temperature evolves, or else the geothermal temperature may be measured at predetermined time intervals or continuously, in order to provide more accurate and up-to-date mass flux calculations over time.

Referring to Figure 3, a mass flux calculation software component 310, which is arranged to execute a computer-implemented mass flux algorithm, may be provided as part of a processing system 300. The processing system 300 comprises conventional operating system and storage components such as a system bus connecting a random access memory (RAM) 301, a hard disk 302, a central processing unit (CPU) 303, I/O adaptors 304 facilitating connection to user input/output devices and, in some embodiments, interconnection with other devices on a network N1. The Random Access Memory (RAM) 301 contains operating system software 315 which controls, in a known manner, low-level operation of the processing system 300. The RAM 301 contains the mass flux calculation component and any other software components, such as a reservoir model 311, operating mode component 312 and incremental oil prediction component 313, during execution thereof. Each software component is configurable with measurement and/or predetermined data stored in one or more databases or other storage components which are operatively coupled or connected to the processing system 300; in the system of Figure 3, a storage component DB 1 can store such data relating to the software components 310 to 313, and can also store all other data for use by the other components of the system 300.

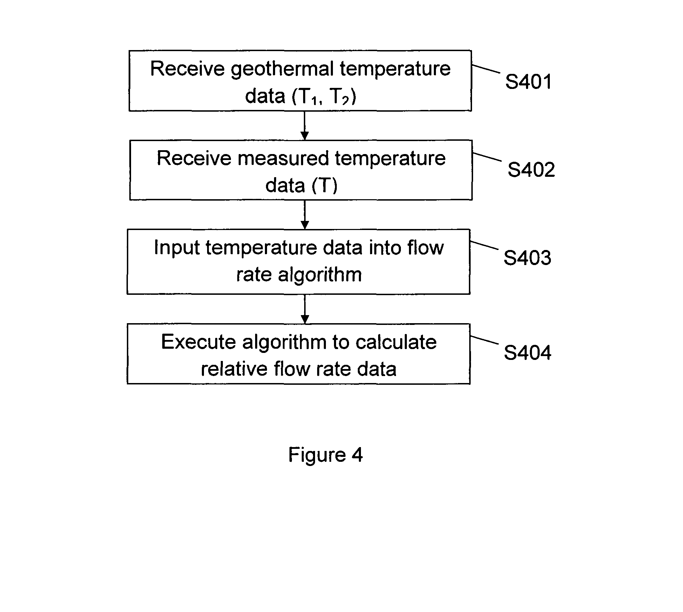

Referring to Figure 4, the steps taken in determining relative mass fluxes of fluids present in the two layers 21, 22 of the reservoir 3 will be described.

At step S401, the processing system 300 receives geothermal temperature data of the rock formation 23, 24 of each of the layers 21, 22, respectively. As explained above, the geothermal temperature data is indicative of the temperature of fluid present in each of the layers. The geothermal temperature data may be obtained by measuring the geothermal temperature at appropriate depths of the reservoir 3 in question, or via a separate borehole drilled to appropriate depths, using, for example, a temperature sensor 25. This measured geothermal temperature data is received by the processing system 300 via, for example, an input 304 of the processing system 300 and may be stored in the storage component DB 1 for future retrieval therefrom if required. Alternatively, the geothermal temperature may be obtained from published data that indicates sufficiently accurate temperatures at depths corresponding to those of the layers 21, 22. In this case, the data is retrieved by the processing system 300 via a suitable interface and may be stored in the storage component DB 1 for retrieval by the mass flux calculation component 310.

At step S402, measured temperature data indicative of a temperature of fluid present in the production well, that is, the mixed flow of fluids from each of the layers 21, 22, is received by the processing system 300. The measured temperature data is received via an input 304 and may be stored in storage component DB1 for future retrieval therefrom if required.

At step S403, the geothermal temperature data and the measured temperature data are input into the computer-implemented mass flux algorithm of the mass flux calculation component 310. The mass flux calculation component 310 may retrieve the temperature from the storage component DB 1 or a device external to the processing system 300, for example, the measured temperature data may be retrieved directly from the temperature sensor 26. Downhole pressure sensors typically comprise transducers. Downhole pressure and temperature sensors are commercially available.

At step S404, the mass flux algorithm is executed to calculate the relative mass fluxes of fluid flowing in the layers 21, 22.

The mass flux algorithm is configured with various equations and parameters to calculate the relative mass fluxes. Consider a first fluid having a temperature $T_1$ (inferred from the geothermal temperature) and mass flux $q_1$ flowing in the first layer 21 and a second fluid having a temperature $T_2$ (inferred from the geothermal temperature) and mass flux $q_2$ flowing in the second layer 22. Assuming that the composition and specific heat capacity $C_p$ of the fluid in each layer are similar, for example, that the composition and specific heat capacity $C_p$ of the oil in each layer 21, 22 of the reservoir 3 are similar, the mean temperature T of a mixture of these two fluids, relative to the geothermal temperatures as reference temperatures is given by the sum of the specific heat of the comingled flow in the production well 1 just above the inflow zone of the production well 1:

$$T = \frac{C_p q_1 T_1 + C_p q_2 T_2}{C_p q_1 + C_p q_2} \qquad (1)$$

where (as a second order correction to the simplest relation) the temperature of the flow from the lower flowing zone may include some small adjustment for an adiabatic expansion of the flow in the well-bore from the inflow depth to the depth of the upper inflow zone, and from there the temperature of the mixture may include a small correction for the adiabatic expansion to the level of the temperature sensor 26 (which is ideally located just above the upper inflow zone, in order to minimise the need for any such corrections). Manipulating equation (1) then gives the relation:

$$\frac{q_2}{q_1} = \frac{T - T_1 \mp \varepsilon_1}{T_2 - T \pm \varepsilon_2} \qquad (2)$$

where $\varepsilon 1$ and $\varepsilon 2$ allow for some error in the input data and any assumptions made in reaching the above equation, as described further below (and as above for the adiabatic expansion effects).

The above approach provides the basic method for using the production well 1 measured temperature data to determine the relative mass fluxes in each of the oil-producing layers 21, 22.

Therefore, the relative mass flux data can be calculated independently of the total mass flux in the production well 1, and is dependent on the input geothermal and measured temperature data. The relative mass fluxes may be output from the processing system 300 in a suitable form, for example as a value which represents a ratio. It will be understood that although the relative mass fluxes of two layers 21, 22 is described above, the algorithm may be configured to calculate the relative mass fluxes of three or more layers.

In the case of three layers, the inflow temperature above the inflow zone from the highest layer is measured, and a mass flux q1, q2 and q3 is allocated for the first, second and third layers, with temperatures T1, T2 and T3, respectively. The average temperature just above the upper inflow zone is then:

$$T = \frac{C_{p1} q_1 T_1 + C_{p2} q_2 T_2 + C_{p3} q_3 T_3}{C_{p1} q_1 + C_{p2} q_2 + C_{p3} q_3} \qquad (3)$$

From equation (3), a relationship between $q_2/q_1$ and $q_3/q_1$ can be determined if $T$, $T_1$, $T_2$ and $T_3$ are known and if the composition of the flow from each layer is known from initial drilling (or is assumed to be the same). The different mass fluxes can then be calibrated if there are downhole inflow control valves to each flowing layer, essentially by closing one of the three flowing zones, for example the third layer, and determining $q_1/q_2$ for the other two layers. Measurements of the pressure at the base of the well may be used to determine a relation between the mass flux and the pressure drop across each of the first and second layers in which fluid flows. If the third layer is then opened up to allow fluid to flow therein again, any change in pressure in the wells can be used to interpret a change in the flow of the original two zones, and the difference between this and the overall flow may be matched to the third zone - this can then be combined with the temperature signal for consistency. If there is no pressure signal, an assumption can be made that the flow remains the same from the first and second layers to calculate the mass flux from the third layer, having performed this calculation for the original two layers with the inflow control valve of the third layer closed.

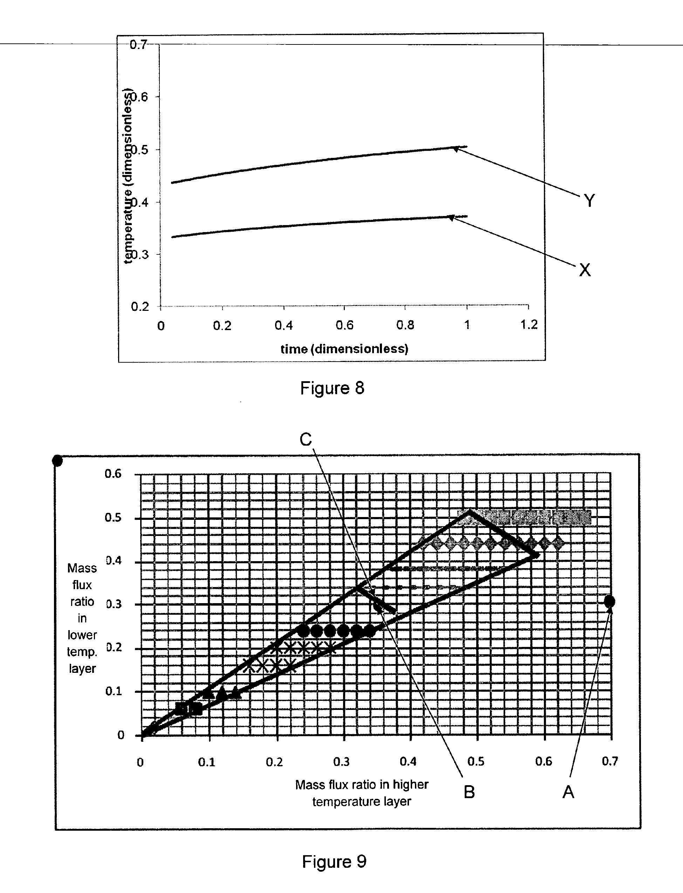

Alternatively, two temperature sensors can be installed, one above and one below the uppermost inflow zone, as described further below with reference to Figure 8.

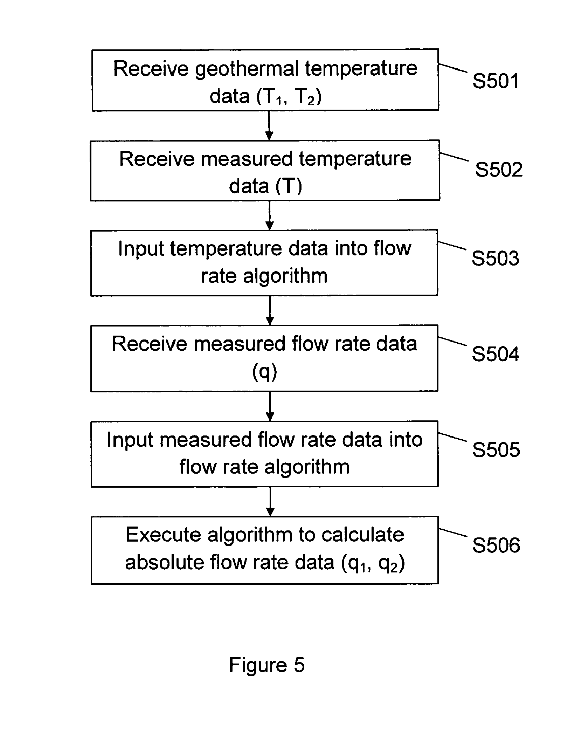

Referring to Figure 5, steps S501-S503 correspond to steps S401-S403 of Figure 4. However, in this example, measured mass flux data indicative of a measured absolute mass flux of the fluid present in the production well is received by the processing system 300 at step S504. The measured mass flux data is received via an input 304 and may be stored in storage component DB 1 for future retrieval there from if required. Downhole flow meters that are capable of measuring the mass flux are commercially available. At step S505, the measured mass flux data are input into the computer-implemented mass flux algorithm of the mass flux calculation component 310. The mass flux calculation component 310 may retrieve the measured mass flux from the storage component DB 1 or a device external to the processing system 300, for example, the measured mass flux data may be retrieved directly from a mass flux sensor in the form of a downhole flow meter 27, as shown in Figure 2, which may be suitably placed in the same position as the temperature sensor 26. It should be understood that the order in which the measured temperature and mass flux data are received and input into the algorithm may vary; the temperature data need not be received and/or input into the algorithm before the measured mass flux data is received, and vice-versa. However, the measured temperature and mass flux data should be measured at the same time.

At step S506, the algorithm is executed so as to calculate absolute mass flux data indicative of an absolute mass flux of the fluid in each of the two or more layers.

In the example of Figure 5, the mass flux algorithm is configured with equations (1) and (2) as described above. Additionally, the measured total mass flux q in the production well is also obtained as explained above in relation to steps S504 and S505. Since:

$$q = q_1 + q_2 \qquad (4)$$

where q is the mass flux received at step S504, equations (1) and (4) can be combined and rearranged to determine a solution, and respective error bars ($\varepsilon_q$, $\varepsilon_1$, $\varepsilon_2$), for the values of the absolute mass flux $q_1$, $q_2$ of the fluid in each of layers 21, 22, respectively:

$$q_1 = (q \pm \varepsilon_q) \frac{(T_2 - T \pm \varepsilon_2)}{(T_2 - T_1 \pm \varepsilon_2 \mp \varepsilon_1)} \qquad (5)$$

$$q_2 = (q \pm \varepsilon_q) \frac{(T - T_1 \mp \varepsilon_1)}{(T_2 - T_1 \pm \varepsilon_2 \mp \varepsilon_1)} \qquad (6)$$

where $\varepsilon q$ allows for some error in the input mass flux data and any assumptions made in reaching the above equation, as described further below. The absolute mass of the fluid in each layer can therefore be calculated.

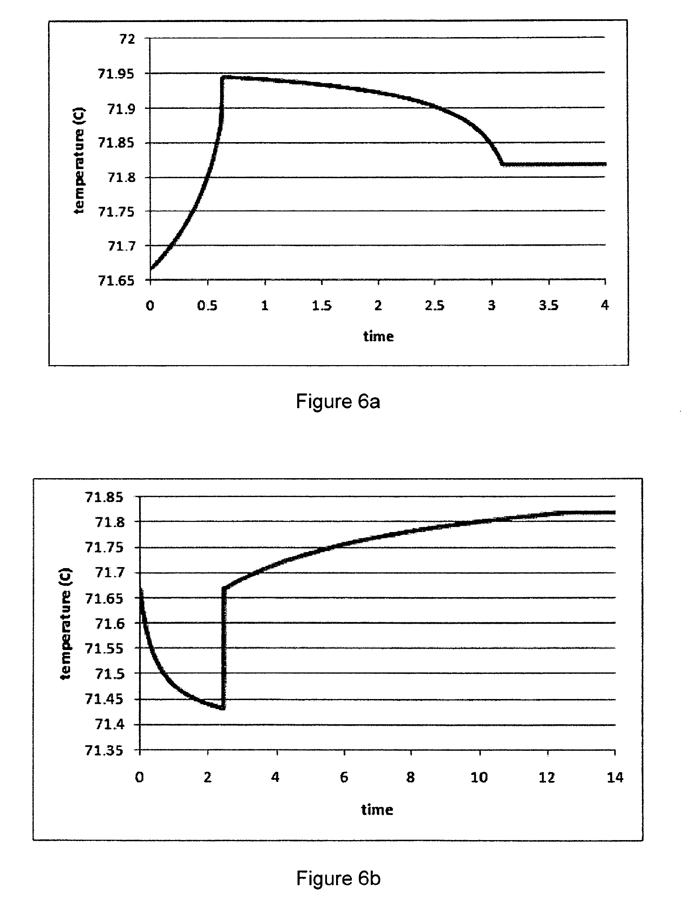

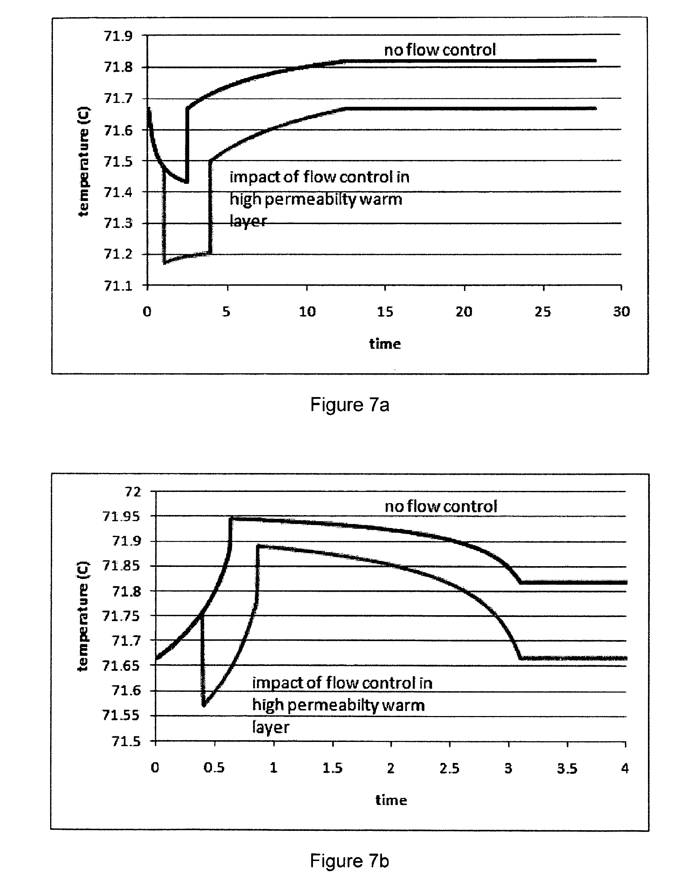

It should be understood that changes in the measured temperature data, or the rate of change of the measured temperature data, over time can be used as a diagnostic tool. The measured temperature signal can be monitored in real time, and optionally recorded or charted over time, and any change in the temperature can be identified. The measured temperature data can be compared with an expected temporal variation in measured temperature data in order to identify the change in the monitored temperature data. The expected temporal variation in measured temperature may be indicative of a change in temperature data associated with a steady state of the production well. On the basis of the identified change the cause of the change can be investigated further and/or determined, for example by analysing differences between the measured temperature data and the expected temporal variation in measured temperature. Alternatively or additionally, monitoring the temperature variation over time can be used to identify the effect of an action applied to the reservoir fluid, such as an adjustment to a flow control valve or the introduction of a polymer flood treatment. The measured temperature signal can, therefore, be indicative of a change in temperature data associated with an action taken in relation to delivery of fluid via the production well, and can help in diagnosing and monitoring the impact of the applied action on changes in the fluid flow, as described below in relation to Figures 6a, 6b, 7a and 7b, which show how a change in the balance of fluid inflow into the production well 1 from the two layers 21, 22 results in a change in the measured temperature of the comingled fluid in the production well 1.

The measured temperature data may also provide a diagnostic tool for recognising water ingress to the production well 1. Water break through (of injection water together with any formation water released by the injection water) may be recognised by the presence of water in the production stream, but the temperature will either increase or decrease depending on which layer it has come from. Should the water fraction (often referred to as "water-cut") increase, this will be shown by a change in the measured temperature of the comingled total flow with time.

Figures 6a and 6b show how the temperature (in °C) of fluid, measured by the temperature sensor 26 at a measurement location in the production well 1, evolves as a function of time (t) as injected fluids (e.g. water) replace the original fluids (e.g. oil) in the reservoir 3. The times shown on the plots are dimensionless and are scaled in accordance with the time it takes water to move from one side of the reservoir to the other, in order to make the plots independent of the specific details of the reservoir or the injection rate. In the example of Figure 6a, the permeability ratios of the rock layers 21, 22 is 0.2 and the viscosity ratio of the injected fluids to the original fluids is 0.25; in the example of Figure 6b, the permeability ratios of the rock layers 21, 22 is 0.2 and the viscosity ratio of the injected fluids to the original fluids is 4. The examples assume that the higher permeability layer has a higher geothermal temperature than the lower permeability layer.

Figure 6a shows an increase in temperature of the fluid as a result of the slow drift in the mass fraction flowing through the layers. The injected fluid is more mobile than the original fluid, leading to an increase in the measured production well 1 temperature. By contrast, in Figure 6b the injected fluid is less mobile than the original fluid, leading to a decrease in the well temperature. The sharp changes in the curves of the graphs at approximately t=0.6 in Figure 6a and approximately t=2.5 in Figure 6b correspond to the breakthrough of the injection fluid, at which point there is a sudden change in the specific heat of the fluid mixture, and hence in the measured fluid temperature. Subsequently, the temperature adjusts to a new equilibrium as the lower permeability layer gradually has all its original fluids (e.g. oil) replaced by injection fluid (e.g. water).

Referring to Figures 7a and 7b (in which the injected fluid is again more mobile or less mobile, respectively, than the original reservoir fluid), the effect of closing an inflow control valve to the higher permeability layer is shown. The measured temperature evolves suddenly at t=1 in Figure 7a and at t=0.4 in Figure 7b, at which time the fluid inflow into the high permeability layer is, for example, halved by activation of a partial closure of the inflow control valve.

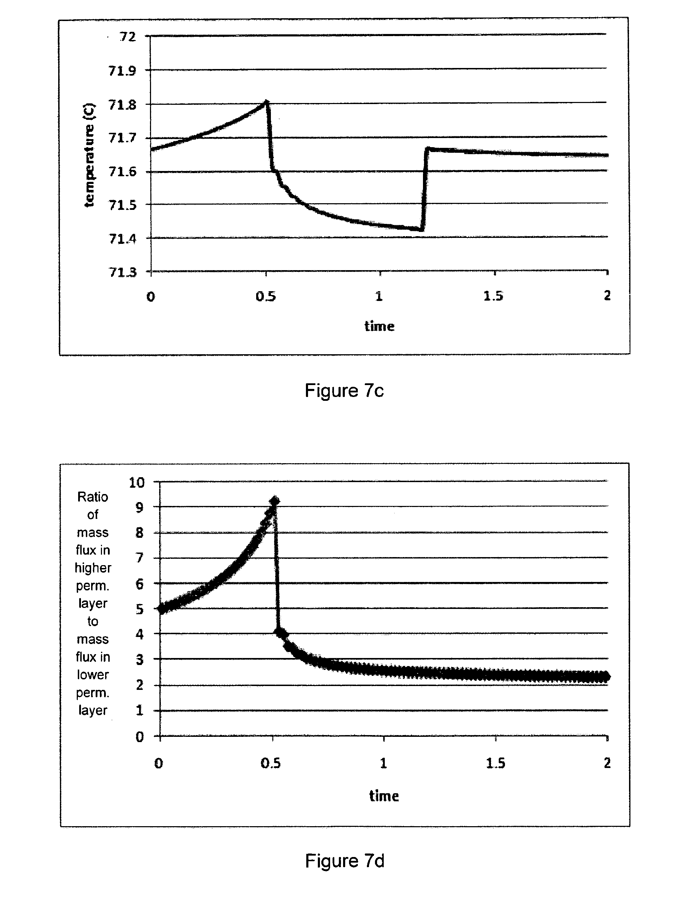

Referring to Figure 7c, the effect of adding a polymer, at t=0.5 to the injection fluid is shown. The polymer increases the viscosity of the injection fluid and, therefore, changes the relative flow pattern; in a two layer system it leads to a greater fractional reduction of the flow in the higher permeability layer compared to that in the lower permeability layer. This results in a change in the temperature of comingled fluid in the production well 1, illustrating that the polymer has blocked the flow of fluid in the higher permeability layer more effectively than it has in the lower permeability layer. At t=1.2, water breakthrough from the higher permeability layer occurs.

The mass flux data output from the computer-implemented mass flux algorithm can similarly be monitored to provide a diagnostic tool for identifying the effects and causes of any change in the measured temperature evolution over time as oil is being produced. The algorithm also allows real time monitoring of the effect of certain actions or treatments on the oil production of the reservoir 3, allowing a determination of the quantitative impact of an action or treatment, which is either decided upon externally to the processing system or is applied after determination by the processing system 300 as a suggested operating mode, on the flow of fluid in each of the layers 21, 22. For example, Figure 7d shows the ratio of the mass flux in the higher permeability later to that of the lower permeability layer, against time, for the example described above in relation to Figure 7c.

Figure 8 shows how measured temperature varies with time in a three-layer reservoir having an upper layer with geothermal temperature $T_U$, a middle layer with geothermal temperature $T_M$ and a lower layer with geothermal temperature $T_L$. In the example of Figure 8, the ratio of the permeability of the middle layer to that of the lower layer is 0.5, while the ratio of the permeability of the upper layer to that of the lower layer is 0.1. The temperatures shown on the plots are dimensionless, and the relative temperatures of the layers are $T_M = T_L+1$ and $T_U= T_L+2$.

Two temperature sensors are installed, one above and one below the uppermost inflow zone in the production well 1. The lower of the two sensors is positioned at a suitable measurement location in the production well 1 that is below the upper layer but above the middle layer and measures the temperature as shown by line X, and is used to distinguish the flow ratio from the lower two layers. The upper of the two sensors is positioned at a suitable measurement location in the production well 1 that is above all three layers and measures the temperature as shown by line Y, and is used to isolate the ratio of the flow from the lower two layers to the upper layer, and hence to enable calculation of the mass flux values for fluid flowing in each of the three layers. In order to determine both the water fraction for the comingled total flow in each production well and the mass flux for the total comingled flow in each production well, using flow and temperature data, a more complex inverse problem exists, which does not have a unique solution in the case that the fraction of water flowing in each layer of a two- or three-layer reservoir is not known. For example, with a water fraction $f_i$ flowing in each specific layer i of the two-layer reservoir 3, then the total specific heat capacity $C_i$ of the fluid (which can comprise a mixture of oil and water) in layer i has a value of:

$$C_i = C_w f_i + C_o (1 - f_i) \qquad (7)$$

where $C_w$ is the specific heat capacity of the injection water and $C_o$ is the specific heat capacity of the oil. Therefore, the relationship for the mean temperature T for a commingled flow when the total specific heat capacities, $C_1$ and $C_2$ of the fluids in the first layer 21 and the second layer 22 respectively differ owing to the layers having different water fractions is given by:

$$(C_1 q_1 + C_2 q_2) T = C_1 T_1 q_1 + C_2 T_2 q_2 \qquad (8)$$

If this is combined with a constraint on the total mass flux (which is assumed to be measured at the surface), then:

$$q_1 + q_2 = q \qquad (9)$$

and;

$$f_1 q_1 + f_2 q_2 = q_w \qquad (10)$$

where $q_w$ relates to the mass flux of the water content. Thus, three equations exist for the four unknowns $q_1$, $q_2$, $f_1$, $f_2$. This introduces some non-uniqueness in the inversion of the measured temperature data, if only instantaneous measured data is used. However, if the measured temperature data is mapped over a sufficient period of time, there will be a smooth trend in the measured temperature with time. For example, initially, dry oil should flow from each layer 21, 22 into the production well 1. Subsequently, injection water may begin to flow from one or other layer 21, 22 into the production well 1, and this will lead to either an increase or decrease in the measured temperature, relative to the previous trend, owing to the change in the specific heat capacity of the mixture of fluid flowing in the production well 1; the increase or decrease depends on which of the layers 21, 22 is responsible for the water flow into the production well 1; the warmer, deeper second layer 22 or the colder, higher first layer 21, as the injection water changes the heat flux into the production well 1. The ingress of water from one of the layers 21, 22 can therefore be recognised in the time-evolution of the measured temperature data. In this case, there will be just three variables, $q_1$, $q_2$, and the value of $f_i$ associated with the layer which has injection water flowing therein (assuming that the other layer does not, the other layer has f=0). The data can then be used to determine these three quantities, up to the point that the temporal trend in the data changes again, which may indicate that injection water has started to flow from the other layer.

Figure 9 shows the possible solutions for ratios of mass fluxes in lower temperature and higher temperature layers, based on an example where an inflow control valve is used to alter the ratio of fluid flow in the layers, as in the examples of Figures 7a and 7b. The initial state of the relative mass fluxes in each layer is shown by point A, while the state after the valve has been activated is shown by point B. The triangular zone indicates possible solutions to the ratio of mass fluxes once the control valve has been activated, assuming a 0.1°C error in the measured temperature data arising from, for example, an error in the accuracy of the instrumentation used or in the calculation of the depth of the layers and hence the geothermal temperature used. If, in addition to the temperature measurements, the total mass flux is measured following activation of the control valve, then this provides an additional constraint on the possible solutions, reducing the possible solutions to those lying on the line C.

Once water is flowing into the production well 1 from both layers 21, 22, the data becomes more difficult to interpret uniquely, since as mentioned above there are then four variables but only three equations. However, the temperature data may still be used to provide insight into the effects of changes in the reservoir owing to an event such as a valve adjustment or treatment (i.e. polymer addition) since the result of such an event will be to cause a sudden change in the temperature of the commingled stream in the production well as a result of the change in the relative inflow from each layer - the subsequent trend of the data may also then change. The nature of the change will indicate how the inflow from the layers (partitioning between the layers) has changed in response to the event. If there is water flowing from both layers into the well at the same time, the quantitative interpretation of this data is subject to some uncertainty owing to the uncertainty in the mass flux associated with each layer.

Whilst the foregoing passages describe using the measured temperature data to calculate the relative and absolute mass fluxes, the calculated relative and absolute mass flux data can be used to determine how the injection of fluid may be appropriately controlled. As described above, the crude oil displacement system of the crude oil recovery system 100 typically comprises one or more fluid injection wells 10 (as shown in Figure 1), one or more injection lines 12, 14, 18 for the injection fluid, and a controller 316 (shown in Figure 3) arranged to control the fluid injection; for example, the controller 316 may control the concentration of a chemical (e.g. a polymer) added to the injection fluid, injection rate or slug size (that is, the volume) of the injected fluid. The controller 316 may also be arranged to control one of more valves 28, 29 (examples of which are shown in Figure 2) placed in the injection well(s) 10, in order to control the amount or type of fluid flowing into the layers of the reservoir 3. The displacement system may also comprise equipment associated with the treatment of the injection fluid in preparation for injection, such as equipment for adding a polymer to the injection fluid or otherwise chemically altering the injection fluid. On the basis of the calculated relative mass flux data or absolute mass flux data in the layers 21, 22, one or more operating modes of the crude oil displacement system can be determined.

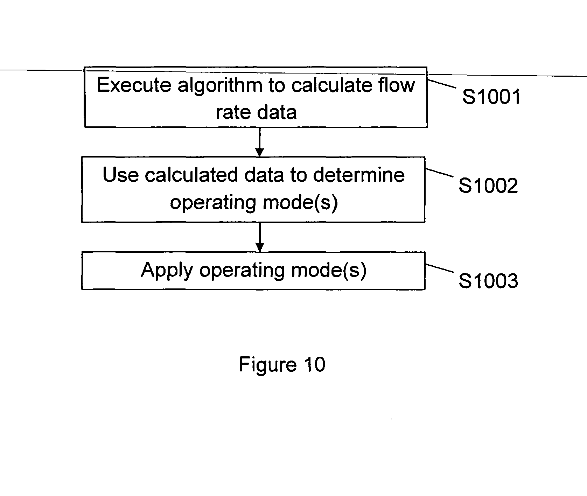

Referring to Figure 10, once the mass flux algorithm has been executed and the relative and/or absolute mass flux data are generated (as shown in step S1001, which corresponds to one or both of steps S404 and S506), software executed by the CPU 303 of the processing system 300 determines (step S1002), on the basis of the generated data, the one or more operating modes of the crude oil displacement system. This software preferably comprises a separate operating mode component 312 which is executable by the processing system 300. Measurement and/or predetermined data required by the operating mode component 312, such as a predetermined threshold value of an acceptable relative mass flux ratio, can be stored and accessed from the data storage component DB 1 as necessary. Multiple data sets obtained over time can be input in order to take account of any change in the relative or absolute mass flux data over time when determining an operating mode.

The determination of an operating mode can comprise an identification of an instruction to open or close a specific valve 28, 29, depending on the fraction of relative flow in each layer. For example, if an unacceptably large proportion of the oil flowing in the production well 1 is determined to be flowing from the first layer 21, this may indicate that oil in the second layer is being bypassed by the injection fluid, owing to the presence of higher permeability pathways in the second layer 22. To address this, one or both of first and second inflow valves 28, 29 can be adjusted; the first valve 28 can be adjusted to allow less injection fluid to flow into the first layer 21, or the first valve 28 can be closed altogether, and similarly the second valve 29 can be opened to a greater degree. The degree to which the valves 28, 29 are opened or closed will be dependent on the fraction of the mass flux in each of the layer 21, 22, and can be calculated by the operating mode component 312 and output therefrom as part of the operating mode instruction. The resulting valve adjustment will allow a greater proportion of injection fluid to flow into the second layer 22 than was able to flow into the second layer 22 before the valve 28 was adjusted. Alternatively or additionally, determining the operating mode can comprise identifying one or more specific configuration settings for the displacement system, such as a specific volume of injection fluid to be injected.

Alternatively, the operating mode can comprise an instruction to start or stop a planned treatment, or a more specific instruction such as an adjustment to the concentration of polymers added to the injection fluid or the use of different expandable polymeric microparticles having labile cross-links that break at a different pre-determined temperature and/or pH, thereby altering the location of the polymer block in the reservoir (thereby providing different time-release rates for the polymer block).

The operating mode component 312 is configured to use a predetermined set of rules in conjunction with input data such as the relevant specified thresholds and/or predetermined values and the generated relative and/or absolute mass flux data, in order to determine the operating mode. These rules are stored in and accessible from the storage component DB1 as necessary.

The computer-implemented method can further include an optional step, S1003, of applying or inputting the determined operating mode to a controller 316 of the displacement system.

The computer-implemented mass flux algorithm described above employs various assumptions in calculating the relative and absolute mass fluxes of the fluid in each layer 21, 22; such assumptions, as will be described in more detail below, are made in order to simplify the algorithm, but further considerations can be taken into account by the algorithm.

Firstly, the algorithm described above assumes, for simplicity, that the layers 21, 22 are hydraulically independent, although the mass flux algorithm may be appropriately configured to allow for a situation where this is known or suspected not to be the case. If the layers 21, 22 are hydraulically connected, for example by a fault in the middle of the field between the injection well 10 and the production well 1, this may be recognisable in the measured temperature data since fluid could flow from one layer to the other, and the layer receiving the fluid would then gradually develop a temperature signal associated with the other layer.

Secondly, in the above example it is assumed that the layers are substantially horizontal. However, if one or both of the layers are in fact inclined to the horizontal or "tilted", with time there will be a net drift of the overall geothermal temperature in the tilted layer(s) in which the oil is flowing as the oil moves "up" or "down" relative to its original depth. This drift is likely to be slow, for example in the order of months to years, compared to other changes, and so although important for the inversion on that time-scale, for fields which have very little tilt, the effect can be considered to be negligible. If, for example, the mass flux algorithm is being used to track changes in the mass flux associated with the opening or closing of inflow control valves or with the use of a polymer treatment, those changes will occur more rapidly (typically in the order of hours or days) than the drift of the geothermal temperature (typically in the order of months or years). Therefore, provided there is some analysis of the uncertainty in the geothermal temperature with time, as expressed by the error bars $\varepsilon_0$, $\varepsilon_1$, $\varepsilon_2$ in the above relations, then the impact on the interpretation of the thermal response to different actions and treatments applied will be relatively small. Indeed, if the one or more of the layers is inclined, so that the geothermal temperature drifts in time, it is possible to carry out well-tests periodically and, on the basis of the test results, to constrain this drift by introducing parameters into the above equations to allow for the slow evolution of the measured temperature as the oil flows along the inclined layer(s).

Thirdly, equation (1) assumes constant pressure across the layers 21, 22. If, in reality, the layers 21, 22 are not at the same or a sufficiently similar pressure to generate an accurate result, pressure gauges can be placed in the production well 1 at the depths of each of the layers 21, 22 and at the location of the mass flux meter (flow meter) 27. In the two layer example, the flow from one layer may influence the flow from another layer if they are not hydrostatically balanced - increasing or decreasing the flow from one layer may change the pressure in the production well 1 and hence the flow which results from the other layer. A model of the flow as a function of the resistance combined with measurements of the pressure in each of the layers enables this to be calibrated, and can be tested in conjunction with the temperature data in order to estimate the mass flux from each of the layers without the use of a surface flow meter, or as a verification of the surface flow meter.

Corrections to the temperature data associated with the (near) adiabatic expansion can also be included in the calculation. This adiabatic expansion is associated with the change in pressure as the flow from the lowest part of the formation rises up the formation to the temperature gauge above the upper flowing zone of the reservoir.

Fourthly, the temperature of the oil may change as it leaves the layers 21, 22 and enters the production well 1, owing to the Joule-Thompson effect that arises as the oil expands from the reservoir into the production well 1. However, the Joule-Thompson effect is typically relatively small in production wells when the produce fluid is either oil or a mixture of oil and water. It should be understood that sudden changes in the temperature of the comingled total flow, or changes in the rate of change of the temperature of the comingled total flow owing to a change in injection strategy, the closing of an inflow control valve 28, 29, or the addition of a polymer to the injection fluid, are distinct from the Joule-Thompson effect. In the example described above the algorithm is simplified by assuming that any effect owing to the Joule-Thompson effect is negligible; however, the algorithm may be configured to allow for this effect to a suitable degree if required.

Fifthly, the example described above assumes that the injected fluid, for example injection water, displaces reservoir fluid, for example oil, and that the oil is then pushed by the injected water front along the layers 21, 22 and into the production well 1. The problem becomes somewhat more complex if the injected water flows through one or both of the layers and also enters the production well and begins to flow into the well - the thermal properties of the water and oil are different and so this will lead to a change in the mean temperature of the commingled flow and measured in the production well 1 if such water "break through" occurs from one or both of the layers 21, 22. There may be a slow drift in temperature with time as the water "cut", that is, the fraction of water in the commingled fluid flowing in the production well 1, increases with time. However, changes to the overall flow pattern associated with polymer addition or changes to the operation of inflow control valves 28, 29 can also lead to either a jump in temperature and/or a change in the rate of change of the temperature of the commingled fluid flowing in the production well 1. Detection of water break through may also be of interest and the temperature of the commingled fluid can be helpful in recognising this event, since it will be characterised by either a jump in temperature or an alteration in the rate of change of the temperature.

Finally, although the mass flux has been referred to above, the volumetric flux, or volumetric flow rate may also be calculated. If the fluid composition (i.e. water or oil) is known, the specific heat of that fluid can be used to derive the mass flux. The density of the fluid can then be used to derive the volume flux. It is assumed that the oil in each layer is of uniform composition and hence uniform specific heat; the specific heat can be obtained from well tests. If the different layers contain different oil, having different compositions, then the different values of the specific heat in each layer can be used in the model.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A computer-implemented method for determining relative mass fluxes of fluids present in two or more layers of an oil-bearing reservoir, each of the layers comprising a porous and permeable rock formation, and each layer being in fluidic communication with a production well arranged to allow fluid to flow from each layer into the production well, the method comprising the steps of:

   receiving geothermal temperature data of the rock formation of each of the two or more layers, said geothermal temperature data being indicative of the temperature of fluid present in each of the layers;
   receiving measured temperature data indicative of a temperature of fluid present at a location in the production well; and
   on the basis of differences between the geothermal and measured temperature data, calculating mass flux data indicative of relative mass fluxes of the fluids in the two or more layers, said relative mass fluxes corresponding to a range of possible mass fluxes in each of the two or more layers.

2. A method according to claim 1, the method further comprising the steps of:

   receiving measured mass flux data indicative of an actual mass flux of the fluid present at the location in the production well; and
   determining, for the range of possible mass fluxes, an actual mass flux of the fluid in each of the two or more layers on the basis of the measured mass flux data.

3. A system for determining relative mass fluxes of fluids present in two or more layers of an oil-bearing reservoir, each of the layers comprising a porous and permeable rock formation, and each layer being in fluidic communication with a production well arranged to allow fluid to flow from each layer into the production well, the system comprising:

   data receiving means arranged to receive:

   (i) geothermal temperature data of the rock formation of each of the two or more layers, said geothermal temperature data being indicative of the temperature of fluid present in each of the layers; and
   (ii) measured temperature data indicative of a temperature of fluid present at a

   location in the production well;

   the system further comprising:

   computer-implemented means arranged to calculate, on the basis of differences between the geothermal and measured temperature data, mass flux data indicative of relative mass fluxes of the fluids in the two or more layers, said relative mass fluxes corresponding to a range of possible mass fluxes in each of the two or more layers.

4. A computer-implemented method for monitoring the mass flux of fluids present in two or more layers of an oil-bearing reservoir, each of the layers comprising a porous and permeable rock formation, and each layer being in fluidic communication with a production well arranged to allow fluid to flow from each layer into the production well, the method comprising the steps of:

   receiving a plurality of sets of measured temperature data, each set of measured temperature data being indicative of a temperature of fluid present at a location in the production well at a different time;
   monitoring the received temperature data over time;
   identifying a change to the monitored temperature data, said change being indicative of a change in relative mass fluxes of the fluids in the two or more layers, said relative mass fluxes corresponding to a range of possible mass fluxes in each of the two or more layers.

5. A method according to claim 4, further comprising comparing the received temperature data with an expected temporal variation in measured temperature data, whereby to identify the change to the monitored temperature data.

6. A method according to claim 5, further comprising analysing differences between the received temperature data and said expected temporal variation in measured temperature data in order to determine the cause of the identified change.

7. A method according to claim 5 or claim 6, wherein the expected temporal variation in measured temperature is indicative of a change in temperature data associated with an action taken in relation to delivery of fluid via the production well.

8. A method according to claim 5 or claim 6, wherein the expected temporal variation in measured temperature is indicative of a change in temperature data associated with a steady state of the production well.

FIG. 1

Figure 2

FIG. 3

Receive geothermal temperature
data ($T_1$, $T_2$)

S401

Receive measured temperature
data (T)

S402

Input temperature data into flow
rate algorithm

S403

Execute algorithm to calculate
relative flow rate data

S404

Figure 4

Receive geothermal temperature
data (T₁, T₂)                        S501

Receive measured temperature
data (T)                             S502

Input temperature data into flow
rate algorithm                       S503

Receive measured flow rate data
(q)                                  S504

Input measured flow rate data into
flow rate algorithm                  S505

Execute algorithm to calculate
absolute flow rate data (q₁, q₂)    S506

Figure 5

Figure 6a

Figure 6b

Figure 7a

Figure 7b

Figure 7c

Figure 7d

Figure 8

Figure 9

Execute algorithm to calculate flow rate data — S1001

Use calculated data to determine operating mode(s) — S1002

Apply operating mode(s) — S1003

Figure 10

Europäisches
Patentamt

European
Patent Office

Office européen
des brevets

# EUROPEAN SEARCH REPORT

Application Number

EP 10 25 1068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 3 913 398 A (CURTIS M REX) 21 October 1975 (1975-10-21) | 1-3 | INV. E21B47/06 G01F1/00 |
| A | * column 1 - column 16 * | 4-8 | |
| Y | WO 2005/035943 A1 (SCHLUMBERGER SURENCO SA [PA]; SCHLUMBERGER OILFIELD ASSIST [VG]; SCHLU) 21 April 2005 (2005-04-21) * page 21 - page 28; claims 1,3,6,12,18,19,36; figures 2,8,9 * | 1-8 | |
| X | US 2007/234788 A1 (GLASBERGEN GERARD [NL] ET AL) 11 October 2007 (2007-10-11) | 4-8 | |
| A | * the whole document * | 1-3 | |
| Y | US 2008/201080 A1 (LOVELL JOHN R [US] ET AL) 21 August 2008 (2008-08-21) * the whole document * | 1-8 | |
| A | US 2010/106421 A1 (MACPHERSON JOHN D [US]) 29 April 2010 (2010-04-29) * the whole document * | 1-8 | |

TECHNICAL FIELDS
SEARCHED        (IPC)

E21B
G01F
G01V

The present search report has been drawn up for all claims

| Place of search | Date of completion of the search | Examiner |
|---|---|---|
| Munich | 19 November 2010 | Fenzl, Birgit |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 10 25 1068

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2010

| Patent document cited in search report | | Publication date | Patent family member(s) | | Publication date |
|---|---|---|---|---|---|
| US 3913398 | A | 21-10-1975 | NONE | | |
| WO 2005035943 | A1 | 21-04-2005 | US | 2007213963 A1 | 13-09-2007 |
| US 2007234788 | A1 | 11-10-2007 | US | 2008264162 A1 | 30-10-2008 |
| | | | US | 2008264163 A1 | 30-10-2008 |
| US 2008201080 | A1 | 21-08-2008 | NONE | | |
| US 2010106421 | A1 | 29-04-2010 | WO | 2010048411 A2 | 29-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7300973 B